# EUROPEAN PATENT SPECIFICATION

(11) **EP 3 355 754 B1**
(45) Date of publication and mention of the grant of the patent: **30.06.2021**
(21) Application number: 16852215.9
(22) Date of filing: 30.03.2016
(51) Int. Cl.: A47K 17/02, B64D 11/02, E03C 1/322

(54) **TOILET MODULE**
TOILETTENMODUL
MODULE DE TOILETTES

(30) Priority: 30.09.2015 US 201562235278 P; 24.03.2016 US 201615080377
(43) Date of publication of application: 08.08.2018
(73) Proprietor: C&D Zodiac, Inc., Huntington Beach, CA 92647 (US)
(72) Inventor: SAVIAN, Scott, Huntington Beach, CA 92647 (US); SCOLEY, Ian, Geoffrey, Huntington Beach, CA 92647 (US); LONG, Eric, Huntington Beach, CA 92647 (US)
(74) Representative: Stevenson-Hill, Jack Patrick
(86) International application number: PCT/US2016/025040
(87) International publication number: WO 2017/058284

(56) References cited:
- EP-A1- 2 644 791
- WO-A1-2006/099644
- DE-U1- 29 815 271
- JP-A- H0 831 225
- US-A- 2 736 930
- US-A- 4 341 255
- US-A- 4 341 255
- US-A- 5 064 158
- US-A1- 2005 081 763
- US-A1- 2014 196 204
- US-A1- 2014 263 448
- US-B1- 6 986 171
- US-B2- 6 834 401
- US-B2- 8 056 739
- US-B2- 8 375 638

## Description

### FIELD OF THE INVENTION

The present invention relates generally to a toilet module, and more particularly to a toilet module for use with a lavatory in an aircraft.

### BACKGROUND OF THE INVENTION

Commercial aircraft, such as the Airbus A320 or Boeing 737, are typically constructed from modular components, the size, weight and construction of which are dictated by many considerations, including fuselage dimensions, aesthetic and safety. Many of these requirements are imposed by law or regulation. Aircraft components, such as overhead stowage compartments, seats, lavatories, galleys, lighting systems, etc. are all required to function within strictly confined spaces.

Manufacturers of aircraft are constantly refining interior aircraft designs to achieve more comfort and utility for passengers and crew within carrier-imposed restraints on cost, weight, maintenance down-time, and safety. Commercial passenger aircraft generally include lavatories for use by passengers and crew that include a toilet therein. Cleaning of and replacement of the toilet can often prove difficult.

US4341255 relates to a storm window. According to the abstract of this document the storm window is formed of plastic extrusions with a frame, glazing sheet, and lock strips pushed into grooves of the frame, holding the glazing sheet between the frame members and lock strips. A removable frame formed of frame members joined together at the corners by corner fasteners with arms which push into slots of the frame members. Mounting clips for mounting a window to a support surface, with variations for flush mounting and recess mounting, with the mounting clips snapping into grooves in the lock strip.

US5064158 relates to a shelf support. According to the abstract of this document the shelf support is of the type which extends along the whole of the rear of the glass shelf. The shelf is inserted into a slot formed between a support member and a retaining member so that the shelf is retained as a cantilever. The retaining member carries an elastically-deformable strip which has a main part and spaced protuberances along its bottom. The retaining member is also of special construction, being of generally triangular shape with a slot in its bottom for receiving an upwards projection on the strip and holding the strip in position along the underside of the retaining member.

DE29815271 discloses a plastic toilet basin which is configured for quick installation using a wall function carrier and tilting tube.

JPH0831225 relates to a luminaire-equipped sealing board and method for installing a luminaire using the same. According to the abstract of this document the sealing board comprises either an original board having a luminaire-mounting hole cut through its centre with its edge left intact or a sealing board frame of standard size obtained by the dividing of the original board into two, four or eight equal parts. The sealing board also comprises a casing enclosing a luminaire which is open at least on one side. The sealing board includes a frame fitted inside an illuminating board. The casing is integrally coupled to the sealing board frame at the edge of the hole in the sealing board panel with the open side of the casing down, and the frame is freely releasable attached to the casing. The sealing board is fitted in place, together with a normal sealing board, and is covered with cloth, and the frame is inserted thereafter.

EP2644791 relates to sanitary equipment and a shrouded fixation for such sanitary equipment. According to the abstract of this document the sanitary equipment is attached to a wall by means of at least one bolt. The sanitary equipment comprises a main body and a rear end integrally formed with said main body and facing said wall when attached, wherein said rear end comprises at least one area onto which a shrouded fixation device is securely attached by means of an adhesive material. The shrouded fixation device is provided for engagement with an associated fixation support of the wall.

WO2006099644 relates to a device method for fixing a sanitary object to a supporting surface using an assembly plate. According to the abstract of his document the disclosure relates to a device and method for fixing a sink, toilet, bidet, or urinal bowl to the floor surface or wall surface of a toilet, bathroom or the like. The base of the bowl can be mounted on the supporting surface in question and can be fixed thereto by means of bolts, especially studs, penetrating boreholes located in the base. An assembly plate can be fixed to the supporting surface which is located inside the base once the bowl has been positioned, and is embodied especially with at least one guide for sliding parts in which the fixing bolt for the sanitary bowl can be anchored.

### SUMMARY OF THE PREFERRED EMBODIMENTS

In accordance to the present invention there is provided a toilet module that includes a shroud that has first and second opposite edges and a toilet associated therewith and first and second attachment assemblies. The first attachment assembly includes a first retainer member that is adapted to be secured to a first wall. The first retainer member includes a first wall attachment flange and a first press fit portion extending generally inwardly from the first wall attachment flange. When the first retainer member is secured to the first wall a first channel is defined between the first wall and the first press fit portion. The first attachment member also includes a first seal member that includes a first bulge portion that is received in the first channel of the first retainer member. The first edge of the shroud is secured by at least one of the first retainer member or the first seal member. The second attachment assembly includes a second retainer member that is adapted to be secured to a second wall. The second retainer member includes a second wall attachment flange and a second press fit portion extending generally inwardly from the second wall attachment flange. When the second retainer member is secured to the second wall a first channel is defined between the second wall and the second press fit portion. The second attachment member also includes a second seal member that includes a second bulge portion that is received in the second channel of the second retainer member. The second edge of the shroud is secured by at least one of the second retainer member or the second seal member.

In a preferred embodiment, the first retainer member includes a first support flange extending inwardly therefrom and the second retainer member includes a second support flange extending inwardly therefrom. The first seal member includes a first seal flange extending inwardly therefrom and the second seal member includes a second seal flange extending inwardly therefrom. The first edge of the toilet shroud is positioned between the first support flange and the first seal flange and the second edge of the toilet shroud is positioned between the second support flange and the second seal flange.

In accordance with another aspect of the present invention there is provided a method of securing a toilet module between opposing first and second walls. The toilet module including a shroud having first and second opposite edges, a back surface and a toilet associated therewith, a first retainer member secured to the first wall, and a second retainer member secured to the second wall. The method includes resting the back surface of the toilet shroud on a first support flange associated with the first retainer member, resting the back surface of the toilet shroud on a second support flange associated with the second retainer member (these steps may be done simultaneously), press fitting a bulge portion of the first seal member into a channel defined in the first retainer member, and press fitting a bulge portion of the second seal member into a channel defined in the second retainer member (these steps may be done simultaneously).

In a preferred embodiment, the method also includes engaging a first hook on the first retainer member with a second hook on the first seal member, and engaging a first hook on the second retainer member with a second hook on the second seal member. The method can also include engaging a ramp portion of the second hook on the first seal member with a ramp portion of the first hook on the first retainer member and engaging a ramp portion of the second hook on the second seal member with a ramp portion of the first hook on the second retainer member. When this is done the second hook slides over the first hook and the second hook slides over the first hook.

In a preferred embodiment, the method includes inserting a protrusive portion extending from the first seal member into a notch defined in the first retainer member, and inserting a protrusive portion extending from the second seal member into a notch defined in the second retainer member for proper alignment. Preferably, a portion of the first seal member is pressed against the first wall to provide a seal, and a portion of the second seal member is pressed against the second wall to provide a seal. Further optional features of the invention are described in the dependent claims.

The retainer member includes a wall attachment flange and a press fit portion extending generally inwardly from the wall attachment flange. When the retainer member is secured to a wall a channel is defined between the wall and the press fit portion. The seal member includes a receiving portion having a groove defined therein and a bulge portion that is received in the channel of the retainer member. In a preferred embodiment, the press fit portion includes a lip and the bulge portion includes an innermost peak. When the retainer member is secured to a wall a first width is defined between the lip and the wall and a second width is defined between the innermost peak of the bulge portion and the wall and the first width is less than the second width. Preferably, the groove faces generally inwardly and wherein the bulge portion extends generally downwardly.

In a preferred embodiment, the attachment assembly includes a hook connection at a bottom thereof. The hook connection preferably includes a first hook on the retainer member and a second hook on the seal member that are engaged with one another. The first and second hooks preferably each include a ramp portion.

In a preferred embodiment, the seal member includes at least one protrusive portion extending generally downwardly therefrom that is received in a notch defined in the press fit portion. Preferably, the seal member also includes at least one cylindrical protrusive portion extending generally inwardly therefrom that is received in a notch defined in the press fit portion. In a preferred embodiment, the wall attachment flange includes a plurality of inserts extending outwardly therefrom.

In a preferred embodiment, the shroud extends between two walls that are part of a lavatory monument. In a preferred embodiment the assembly includes no mechanical fasteners (e.g., screws, bolts, rivets, etc.) and no RTV sealant. However, this is not a limitation and mechanical fasteners and/or RTV sealant can be used as desired.

### BRIEF DESCRIPTION OF THE DRAWINGS

FIG. 1 is a perspective view of a toilet module in accordance with a preferred embodiment of the present invention;
FIG. 2 is an exploded perspective view of the toilet module of FIG. 1 with one of the retainer members attached to the wall;
FIG. 3 is an exploded perspective view from the top showing a portion of the toilet module of FIG. 1;
FIG. 4A is a cross-sectional view showing the shroud received in the groove of the seal member, the seal member received in the retainer member and the retainer member attached to the wall;
FIG. 4B is a cross-sectional view showing the shroud received in the groove of the seal member, the seal member exploded from the retainer member and the retainer member attached to the wall;
FIG. 5 is a cross-section of a portion of the toilet module of FIG. 1 showing the hook connection;
FIG. 6A is a perspective view of a portion of the toilet module of FIG. 1 showing the hook connection;
FIG. 6B is an exploded perspective view of the components shown in FIG. 6A;
FIG. 7 is an exploded perspective view of the attachment assembly showing how the seal member connects to the retainer member;
FIG. 8 is an elevational view of the attachment assembly showing the seal member connected to the retainer member;
FIG. 9 is a perspective view of a lavatory with the toilet module of FIG. 1 installed therein;
FIG. 10 is a perspective view of the lavatory of FIG. 7 with the toilet module exploded therefrom;
FIG. 11 is a perspective view of a toilet module in accordance with another preferred embodiment of the present invention;
FIG. 12 is an exploded view of the toilet module of FIG. 11;
FIG. 13 is an exploded perspective view from the top showing a portion of the toilet module of FIG. 11;
FIG. 14A is a cross-sectional view showing the shroud against the support flange of the retainer member, the seal member received in the retainer member and the retainer member attached to the wall;
FIG. 14B is a cross-sectional view showing the shroud and the seal member exploded from the retainer member and the retainer member attached to the wall;
FIG. 15A is a perspective view of a portion of the toilet module of FIG. 11 showing the hook connection;
FIG. 15B is an exploded perspective view of the components shown in FIG. 15A;
FIG. 16 is an exploded perspective view of the attachment assembly showing how the seal member connects to the retainer member; and
FIG. 17 is an elevational view of the attachment assembly showing the seal member connected to the retainer member.

Like numerals refer to like parts throughout the several views of the drawings.

### DETAILED DESCRIPTION OF THE PREFERRED EMBODIMENTS

The following description and drawings are illustrative and are not to be construed as limiting. Numerous specific details are described to provide a thorough understanding of the disclosure. However, in certain instances, well-known or conventional details are not described in order to avoid obscuring the description. References to one or an embodiment in the present disclosure can be, but not necessarily are references to the same embodiment; and, such references mean at least one of the embodiments.

Reference in this specification to "one embodiment" or "an embodiment" means that a particular feature, structure, or characteristic described in connection with the embodiment is included in at least one embodiment of the-disclosure. The appearances of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but not other embodiments.

The terms used in this specification generally have their ordinary meanings in the art, within the context of the disclosure, and in the specific context where each term is used. Certain terms that are used to describe the disclosure are discussed below, or elsewhere in the specification, to provide additional guidance to the practitioner regarding the description of the disclosure. For convenience, certain terms may be highlighted, for example using italics and/or quotation marks: The use of highlighting has no influence on the scope and meaning of a term; the scope and meaning of a term is the same, in the same context, whether or not it is highlighted.

It will be appreciated that the same thing can be said in more than one way. Consequently, alternative language and synonyms may be used for any one or more of the terms discussed herein. No special significance is to be placed upon whether or not a term is elaborated or discussed herein. Synonyms for certain terms are provided. A recital of one or more synonyms does not exclude the use of other synonyms. The use of examples anywhere in this specification including examples of any terms discussed herein is illustrative only, and is not intended to further limit the scope and meaning of the disclosure or of any exemplified term. Likewise, the disclosure is not limited to various embodiments given in this specification.

Without intent to further limit the scope of the disclosure, examples of instruments, apparatus, methods and their related results according to the embodiments of the present disclosure are given below. Note that titles or subtitles may be used in the examples for convenience of a reader, which in no way should limit the scope of the disclosure. Unless otherwise defined, all technical and scientific terms used herein have the same meaning as commonly understood by one of ordinary skill in the art to which this disclosure pertains. In the case of conflict, the present document, including definitions, will control.

It will be appreciated that terms such as "front," "back," "top," "bottom," "side," "short," "long," "up," "down," "aft," "forward," "inboard," "outboard" and "below" used herein are merely for ease of description and refer to the orientation of the components as shown in the figures. It should be understood that any orientation of the components described herein is within the scope of the present invention.

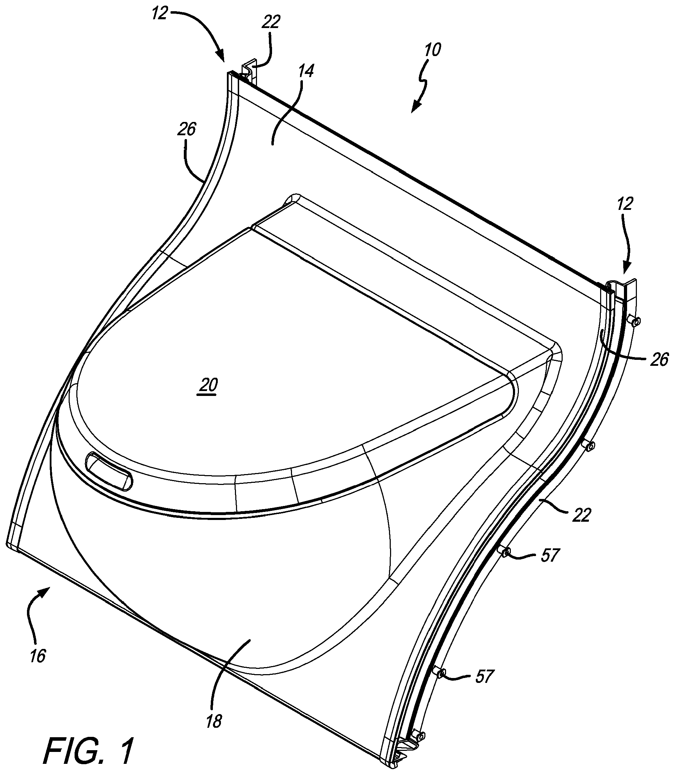

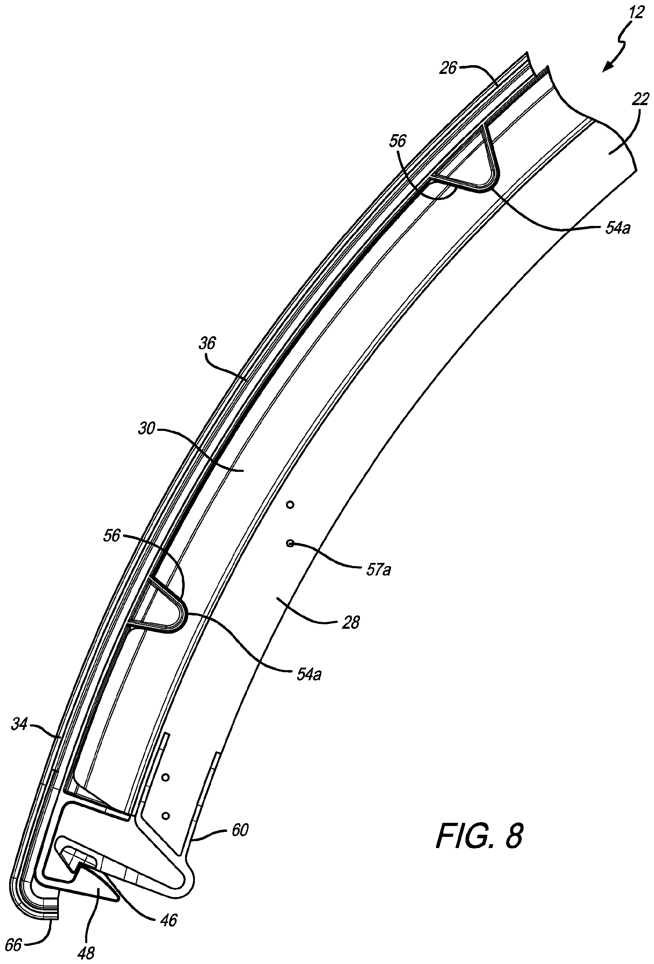

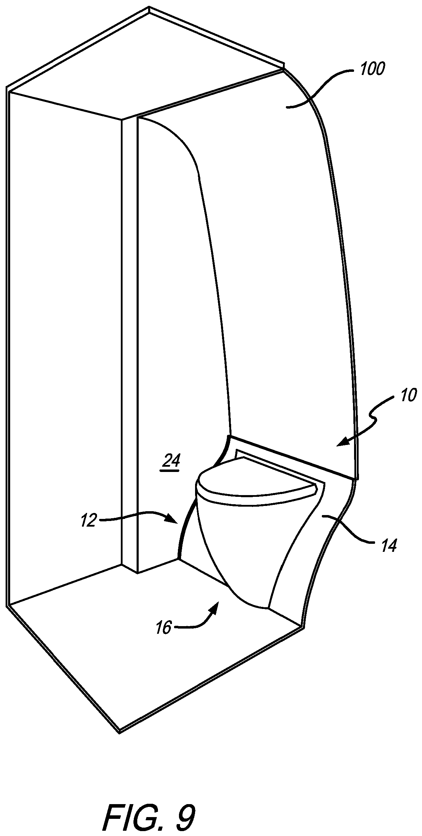

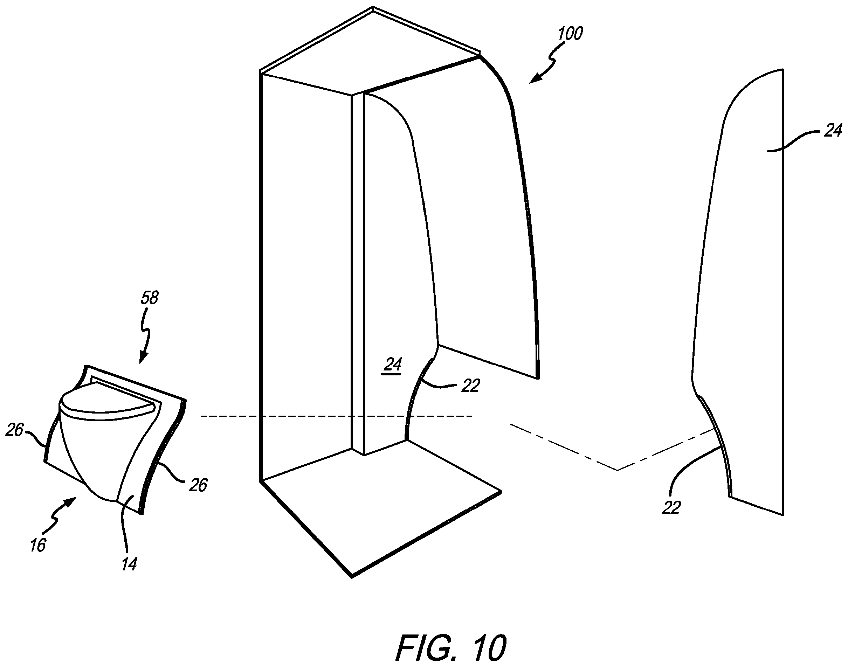

FIGS. 1-10 show a toilet module 10 in accordance with a preferred embodiment of the present invention. As shown, in a preferred embodiment, the toilet module 10 generally includes attachment assemblies 12 on both sides of a shroud 14. The shroud includes a toilet 16. The toilet 16 can be attached to or unitary with the shroud 14. The type of toilet or components thereof is not a limitation on the present invention. For example, the toilet 16 can include a bowl 18 and a hinged seat 20, as is known in the art.

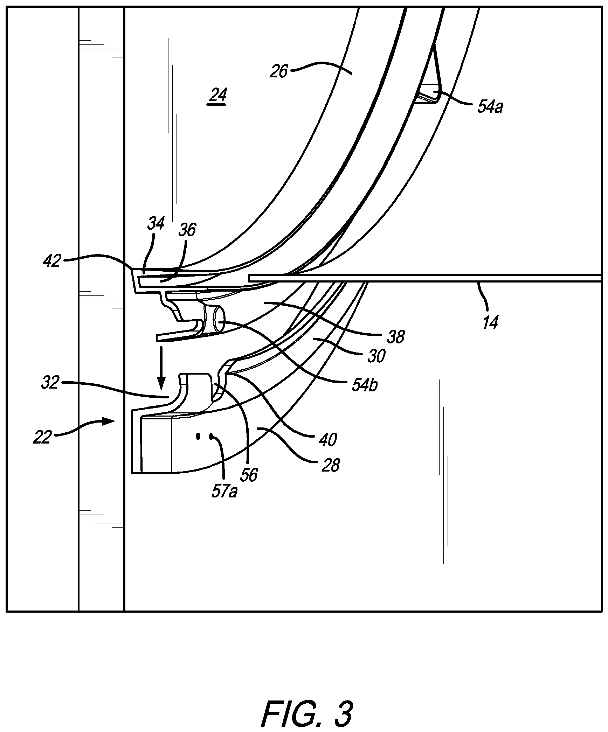

The attachment assemblies 12 are basically mirror images of one another. Therefore, for simplicities sake, only one attachment assembly 12 will be described herein. Generally, the attachment assembly 12 includes a retainer member 22 that is adapted to be secured to a wall 24 and a seal member 26. As is best shown in FIGS. 3-4, the retainer member 22 includes a wall attachment flange 28 and a press fit portion 30 extending outwardly from the wall attachment flange 28. The press fit portion 30 includes a channel 32 that is more clearly defined when the press fit portion 30 is attached to a wall, as shown in FIG. 3. The seal member includes a receiving portion 34 having a groove 36 defined therein and a bulge portion 38 that is received in the channel 32 of the press fit portion 30.

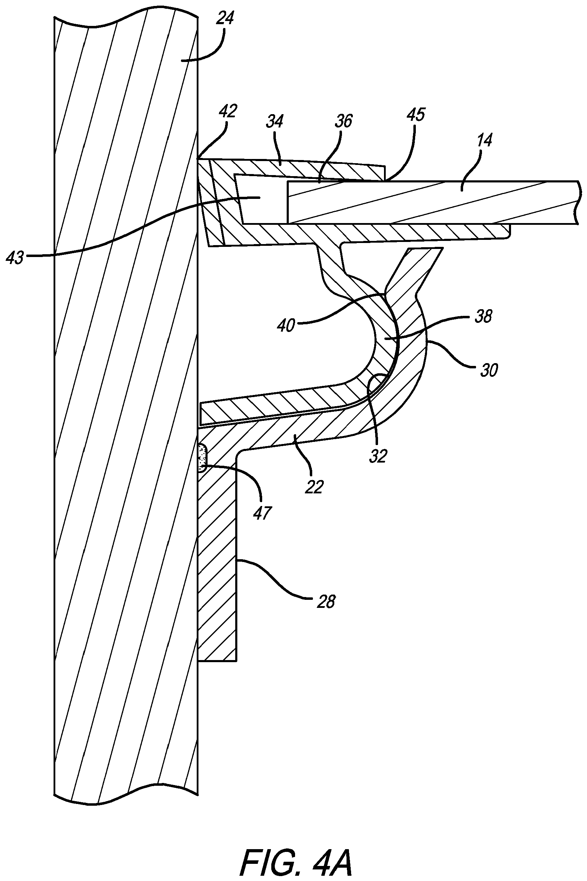

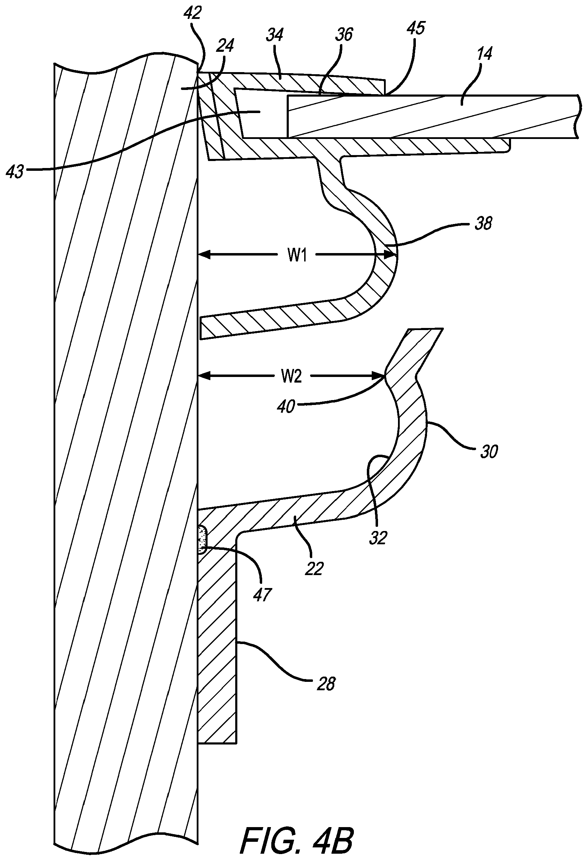

In a preferred embodiment, the seal member 26 is made of a pliable material, such as rubber, so that the bulge portion 38 can be pressed down and into the channel 32, as shown in FIG. 4A. As shown in FIG. 4B, the retainer member 22 includes a lip 40 thereon and the width W1 of the space between the lip 40 and wall 24 is less than the width W2 of the space between the innermost portion or peak of the bulge portion 38 and the wall 24. This requires the bulge portion 38 to be press fit into the channel 32, and the pliable nature of the bulge portion 38 allows this to happen.

The pliable nature of the seal member 26 also allows the shroud 14 to be received and retained in the groove 36, as shown in FIG. 4A. Furthermore, in a preferred embodiment, the seal member 26 includes a seal edge 42 that presses against the wall 24 and helps prevent liquid or other items from getting down into the channel 32. In a preferred embodiment, the seal edges 42 on both sides of the toilet module always seal against the wall 24, regardless of the width of the shroud 14. This is represented by the space or tolerance 43 shown in FIG. 4A between the outer edge of the shroud and the inner edge of the groove 36. This is made possible by the size or width of the retainer member 22 (female portion of the mating arrangement) and the bulge portion 38 (male portion of the mating arrangement) This sizing always keeps the seal edge 42 pressed against wall 24. In other words, the retainer member 22 ensures that the seal edge 42 is pressed to the wall 24 (the datum for the seal is the retainer member 22, not the shroud itself). And, the shroud 14 "floats" in the groove 36 (see space 43) to ensure the proper seal to the wall. Also, as shown in FIGS. 4A and 4B, the receiving portion 34 provides a seal 45 with the shroud.

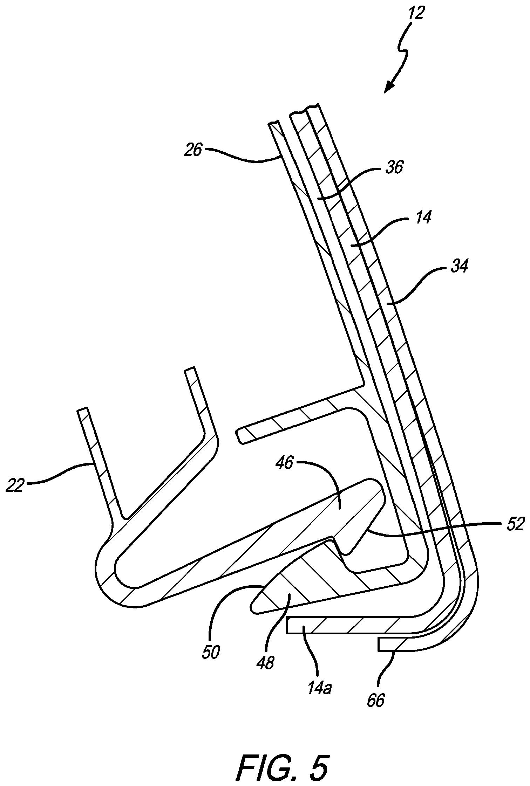

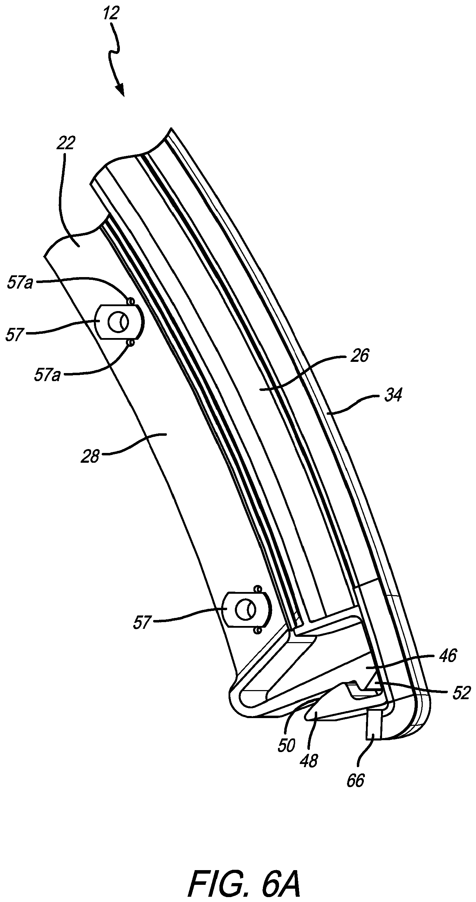

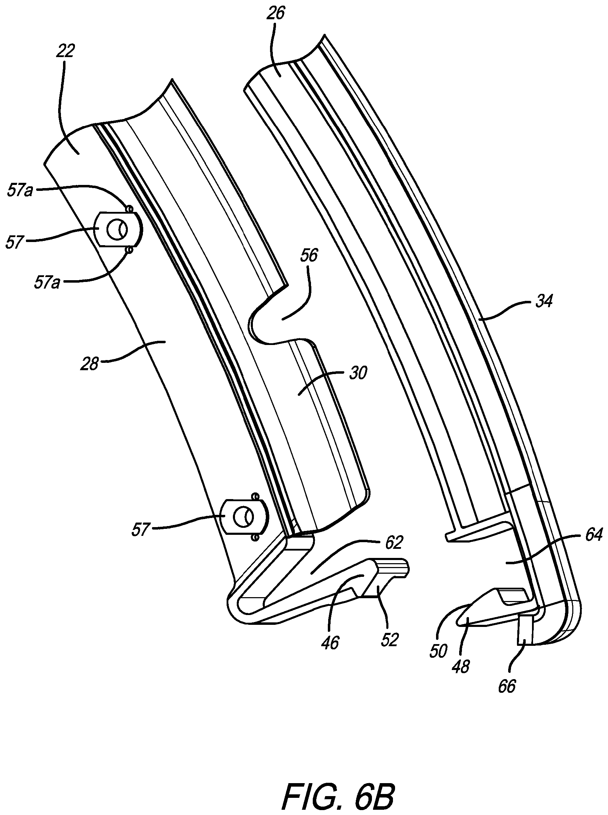

As shown in FIG. 5A-6B, in a preferred embodiment, the attachment assembly 12 includes a hook connection 44 at a bottom thereof. The retainer member 22 includes a first hook 46 and the seal member 26 includes a second hook 48. When the seal member 26 is pressed down on the retainer member 22, the second hook 48 includes a ramp portion 50 that rides or slides over a ramp portion 52 on the first hook 46 until the first and second hooks are engaged or latched, as shown in FIGS. 5 and 6A. To disengage the hooks, a user pulls generally downwardly on the second hook 48 and then pulls the seal member 26 and retainer member 22 apart. In a preferred embodiment, the first hook 46 is located on an extension member 60 that extends generally inwardly and downwardly from the wall attachment flange 28. Furthermore, in a preferred embodiment, the seal member 26 and retainer member 22 also include complementary cavities 62 and 64 that allow the first and second hooks 46 and 48 to engage one another (see FIG. 6B). The seal member 26 also can include a bottom seal extension 66 that partially defines the groove 36 and protects a bottom flange 14a of the shroud 14. In an embodiment, the bottom seal extension 66 engages the floor of the lavatory, thereby providing a seal.

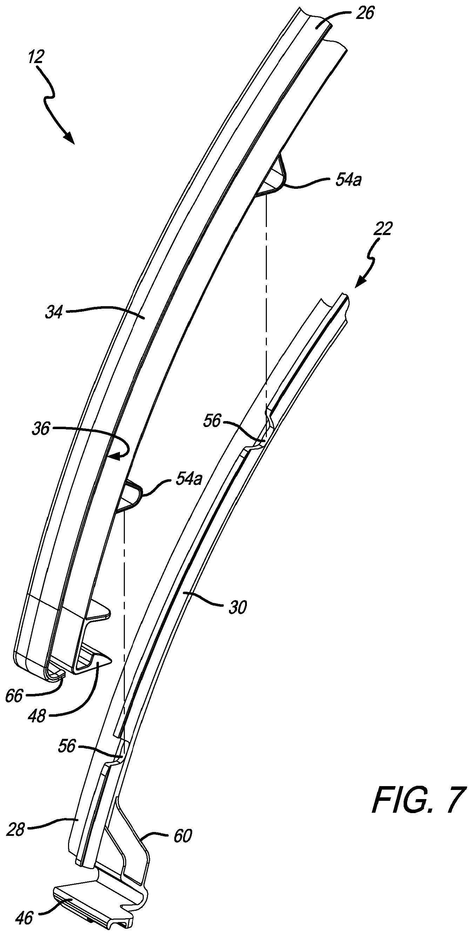

As shown in FIGS. 3 and 7-8, in a preferred embodiment, the attachment assembly 12 includes means for registering or aligning the seal member 26 with the retainer member 22. In a preferred embodiment, the seal member 26 includes protrusive portions 54a and 54b that extend downwardly 54a (see FIGS. 7) and inwardly 54b (FIG. 3) that mate with notches 56 in the press fit portion 30. When installing or attaching the seal member 26 to the retainer member 22, the cylindrical protrusive portion 54b is placed in the corresponding notch 56 first and the seal member is pivoted downwardly until the downwardly extending protrusive portions 54a are received in the corresponding notches 56. Then, the hooks are engaged with one another as described above.

It will be appreciated that the retainer member 22 can be attached to the wall 24 by any method, such as gluing, welding, riveting, threaded fasteners, etc. In a preferred embodiment, as shown in FIGS. 1, 6A and 6B, the wall attachment flange 28 includes inserts 57 extending outwardly therefrom that are inserted into openings in the walls and glued or potted therein. The adhesive can be inserted through openings 57a in the wall attachment flange 28. The wall attachment flange 28 can also include a channel 47 which can be filled with glue or adhesive to secure the flange to the wall 24. The channel 47 can be sized so as to measure and provide a predetermined amount of glue. The channel 47 can run the entire or at least part of the length of the wall attachment flange 28.

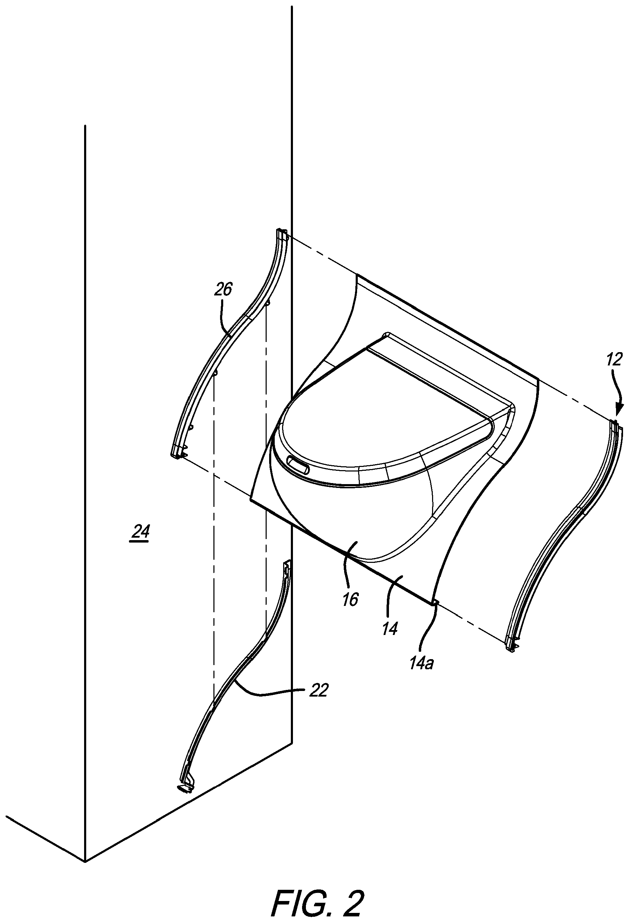

To install the toilet module 10, first, the retainer members 22 are secured to opposing walls 24 in a lavatory 100 and the seal members 26 are secured on opposite sides of the shroud 14 by placing the opposite sides of the shroud 14 in the grooves 36. As shown in FIGS. 2 and 5, the shroud 14 includes the bottom flange 14a that is inserted into a bottom portion of the groove 36. The cylindrical protrusive portions 54b are then placed in the corresponding notches 56 and the shroud 14 together with the seal members 26 (referred to herein as the shroud assembly 58) is pivoted downwardly until the downwardly extending protrusive portions 54a are received in the corresponding notches 56. Simultaneously, the seal members 26 are pushed inwardly/downwardly so that the bulge portions 38 are received in the channels 32. The second hooks 46 are pushed inwardly so that the ramp portions 50 ride up and over the ramp portions 52 of the first hooks 48, thereby engaging the hooks with one another. The steps for securing the shroud assembly 58 to the retainer members 22 can be done in any order.

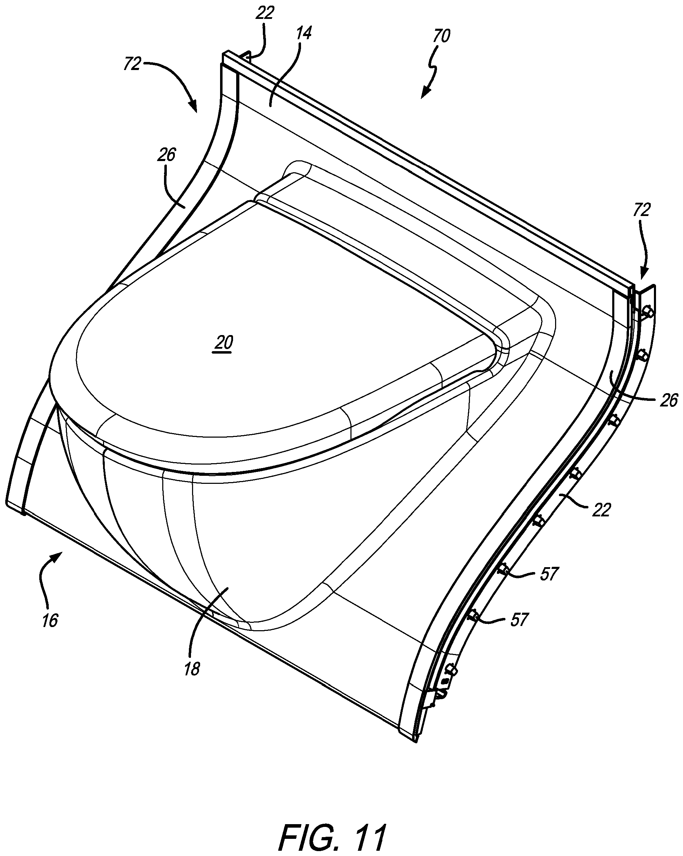

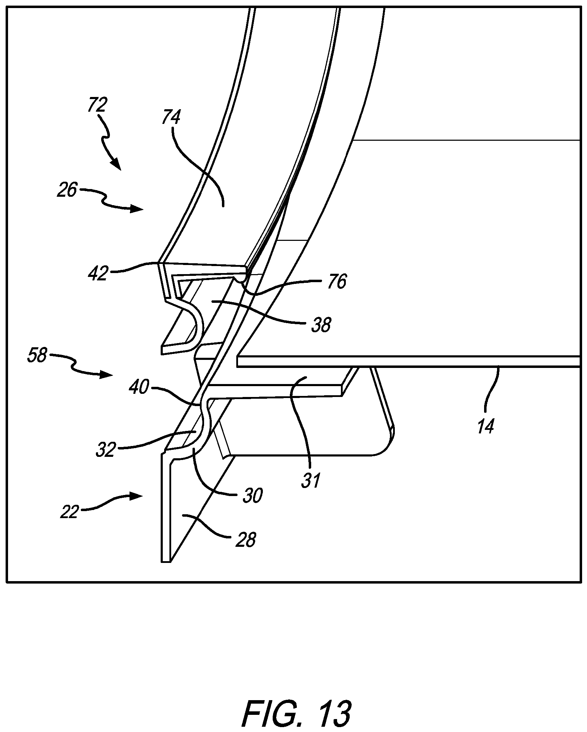

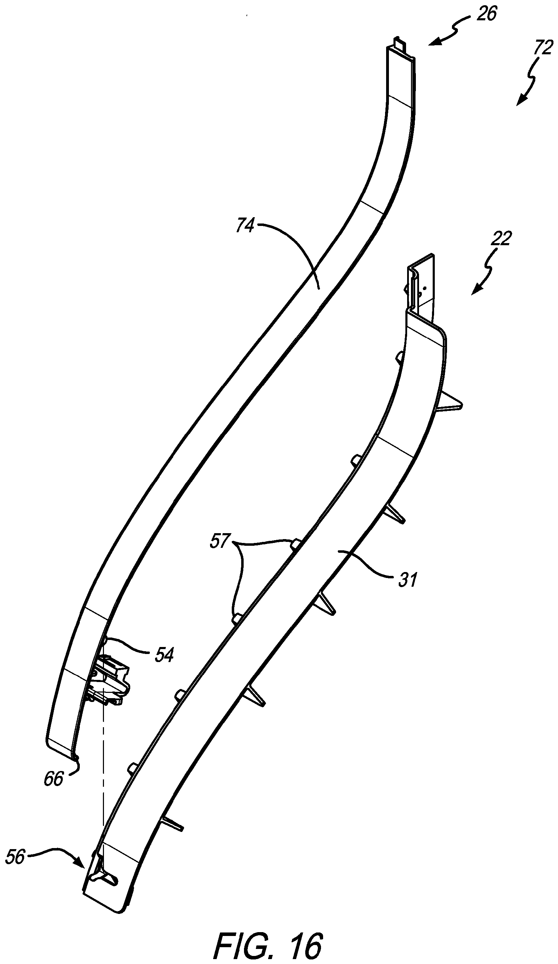

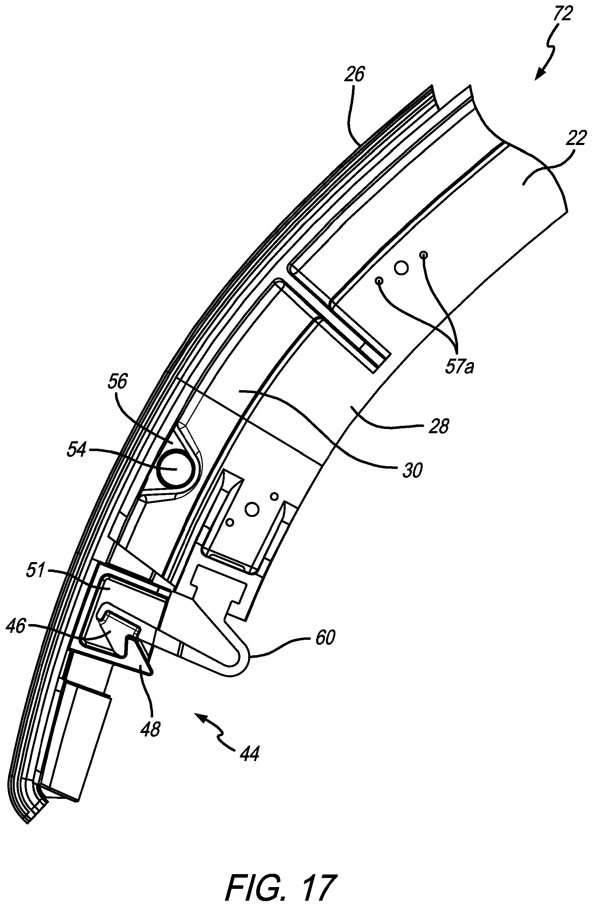

FIGS. 11-17 show another preferred embodiment of a toilet module 70. Toilet module 70 is similar to toilet module 10 described above and like numbers refer to like parts in the drawings. As shown, in a preferred embodiment, the toilet module 70 generally includes attachment assemblies 72 on both sides of a shroud 14. The shroud includes a toilet 16. The toilet 16 can be attached to or unitary with the shroud 14.

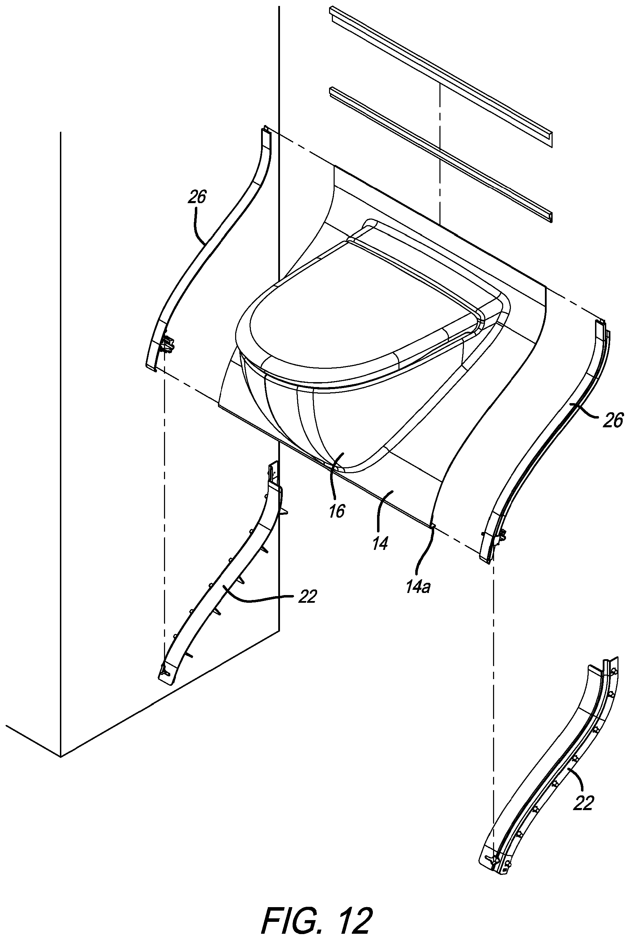

The attachment assemblies 72 are basically mirror images of one another. Therefore, for simplicities sake, only one attachment assembly 72 will be described herein (the right attachment assembly 72 when facing the toilet module 70). Generally, the attachment assembly 72 includes a retainer member 22 that is adapted to be secured to a wall and a seal member 26. As is best shown in FIGS. 12-14B, the retainer member 22 includes a wall attachment flange 28, a press fit portion 30 extending outwardly from the wall attachment flange 28 and a support flange 31. The press fit portion 30 includes a channel 32 that is more clearly defined when the press fit portion 30 is attached to a wall. The seal member 26 includes a seal flange 74 having a lip 76 defined on an end thereof and a bulge portion 38 that is received in the channel 32 of the press fit portion 30.

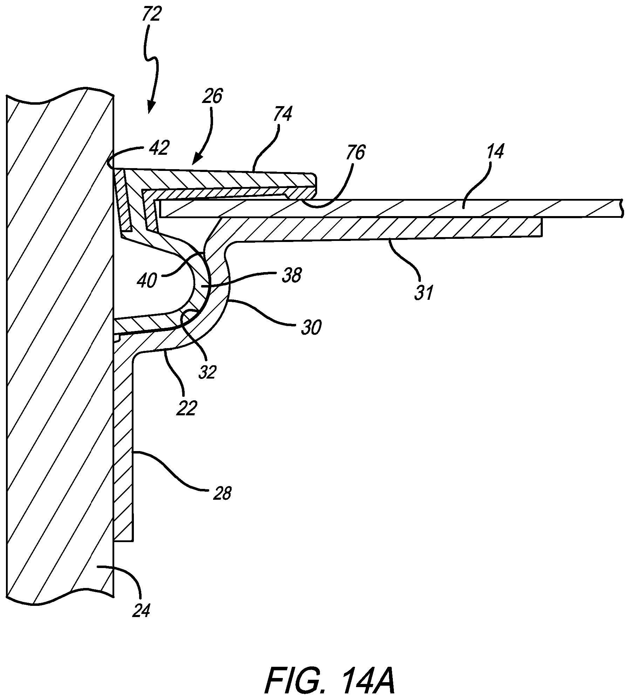

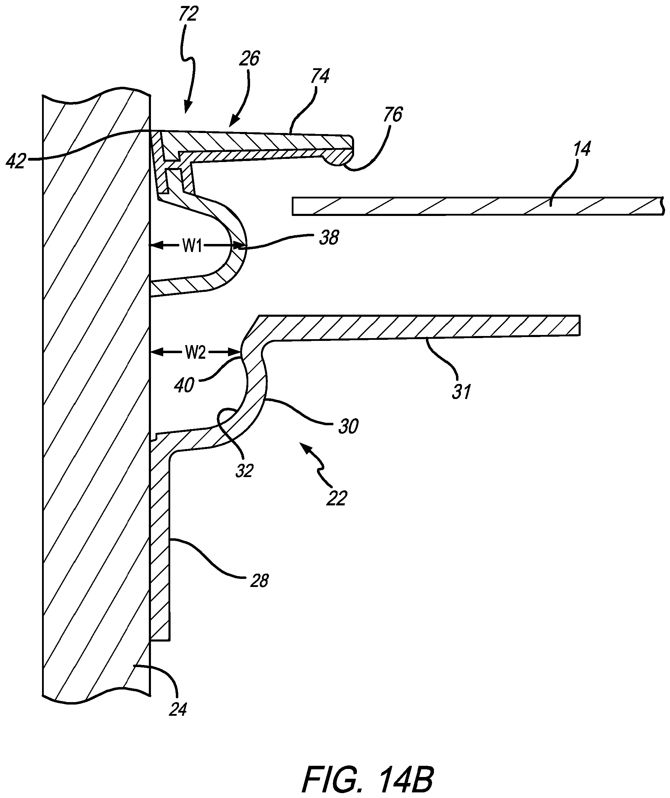

In a preferred embodiment, the seal member 26 (or at least a portion thereof) is made of a pliable material, such as rubber, so that the bulge portion 38 can be pressed down and into the channel 32, as shown in FIG. 14A. As shown in FIG. 14B, the retainer member 22 includes a lip 40 thereon and the width W1 of the space between the lip 40 and wall 24 is less than the width W2 of the space between the innermost portion or peak of the bulge portion 38 and the wall 24. This requires the bulge portion 38 to be press fit into the channel 32, and the pliable nature of the bulge portion 38 allows this to happen.

The pliable nature of the seal member 26 also allows the lip seal 76 to seal the front surface of the shroud 14, as shown in FIG. 14A. Furthermore, in a preferred embodiment, the seal member 26 includes a seal edge 42 that presses against the wall 24 and helps prevent liquid or other items from getting down into the channel 32. As shown in FIGS. 14A and 14B, the seal edge 42 and lip seal 76 can be separate pieces or separate materials from the remainder of the seal member 26. For example, the main body portion of the seal member 26 can be harder or less pliable than the seal edge 42 and lip seal 76.

In a preferred embodiment, the seal edges 42 on both sides of the toilet module always seal against the wall 24, regardless of the width of the shroud 14. This is made possible by the size or width of the retainer member 22 (female portion of the mating arrangement) and the bulge portion 38 (male portion of the mating arrangement). This sizing always keeps the seal edge 42 pressed against wall 24. In other words, the retainer member 22 ensures that the seal edge 42 is pressed to the wall 24 (the datum for the seal is the retainer member 22, not the shroud itself).

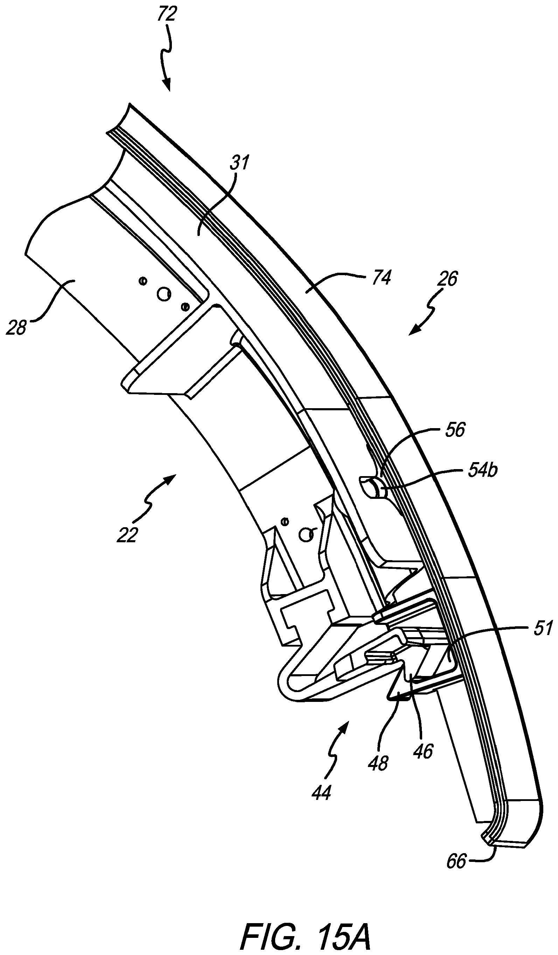

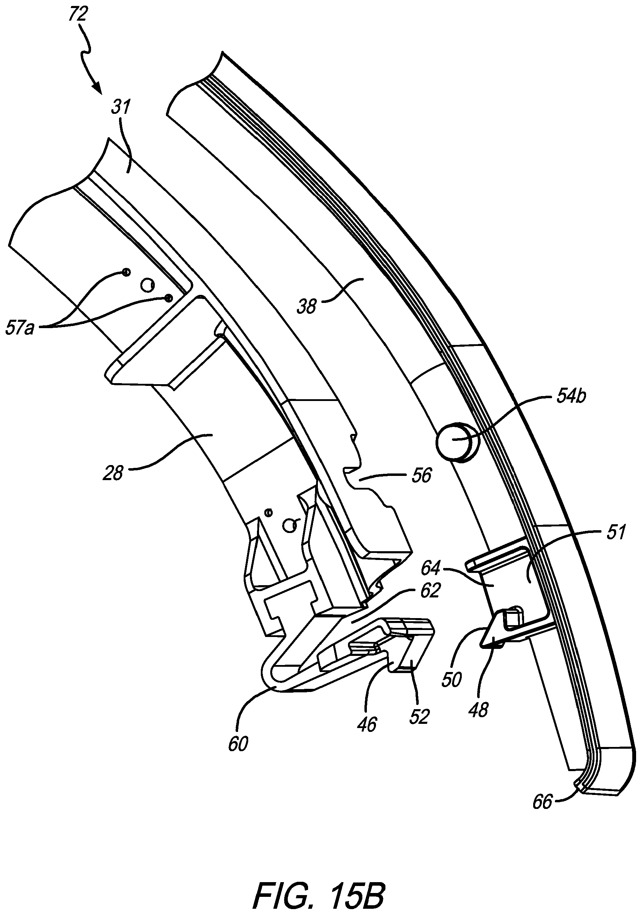

As shown in FIG. 15A-17, in a preferred embodiment, the attachment assembly 12 includes a hook connection 44 at a bottom thereof. The retainer member 22 includes a first hook 46 and the seal member 26 includes a second hook 48. When the seal member 26 is pressed down on the retainer member 22, the second hook 48 includes a ramp portion 50 that rides or slides under a ramp portion 52 on the first hook 46 until the first and second hooks are engaged or latched (with the first hook 50 received in a pocket 51). To disengage the hooks, a user pulls generally downwardly on the second hook 48 and then pulls the seal member 26 and retainer member 22 apart. In a preferred embodiment, the first hook 46 is located on an extension member 60 that extends generally inwardly and downwardly from the wall attachment flange 28. Furthermore, in a preferred embodiment, the seal member 26 and retainer member 22 also include complementary cavities 62 and 64 that allow the first and second hooks 46 and 48 to engage one another (see FIG. 15B). The seal member 26 also can include a bottom seal extension 66. In an embodiment, the bottom seal extension 66 engages the floor of the lavatory, thereby providing a seal.

As shown in FIGS. 15A-17, in a preferred embodiment, the attachment assembly 12 includes means for registering or aligning the seal member 26 with the retainer member 22. In a preferred embodiment, the seal member 26 includes protrusive portion 54b that extends inwardly (FIG. 15B) and mates with notch 56 in the press fit portion 30. When installing or attaching the seal member 26 to the retainer member 22, the cylindrical protrusive portion 54b is placed in the corresponding notch 56 first and the seal member is pivoted downwardly until the bulge portion 38 is received in the channel 32. Then, the hooks are engaged with one another as described above.

It will be appreciated that the retainer member 22 can be attached to the wall 24 by any method, such as gluing, welding, riveting, threaded fasteners, etc. In a preferred embodiment, the wall attachment flange 28 includes inserts 57 extending outwardly therefrom that are inserted into openings in the walls and glued or potted therein.

To install the toilet module 70, first, the retainer members 22 are secured to opposing walls in a lavatory. The shroud 14 (together with the toilet 16) is then positioned on the opposite support flanges 31 of the retainer members 22. The cylindrical protrusive portions 54b of the seal members 26 are then placed in the corresponding notches 56 and bulge portions 38 are pressed into the channels 32, as shown in FIG. 14A. The second hooks 46 are pushed inwardly so that the ramp portions 50 ride up and over the ramp portions 52 of the first hooks 48, thereby engaging the hooks with one another. The seal flange 74 rests on the front surface of the shroud 14. The steps for securing the shroud assembly 58 (the shroud 14 and seal member 26 to the retainer members 22 can be done in any order.

It will be appreciated by those of ordinary skill in the art that modifications can be made to the present invention. For example, the means for registration or alignment can be reversed and the protrusions can be on the retainer member and the notches can be on the seal member. In another embodiment, the means for registration can be omitted and/or the hooks can be omitted. Furthermore any features discussed with toilet module 10 can be included on toilet module 70 and vice versa.

In another preferred embodiment, the seal members can be unitary with the opposite sides of the shroud. The bulge portions can extend downwardly from the shroud and inserted into the channels of the retainer members.

Unless the context clearly requires otherwise, throughout the description and the claims, the words "comprise," "comprising, " and the like are to be construed in an inclusive sense, as opposed to an exclusive or exhaustive sense; that is to say, in the sense of "including, but not limited to. " As used herein, the terms "connected," "coupled," or any variant thereof, means any connection or coupling, either direct or indirect, between two or more elements; the coupling of connection between the elements can be physical, logical, or a combination thereof. Additionally, the words "herein," "above," "below," and words of similar import, when used in this application, shall refer to this application as a whole and not to any particular portions of this application. Where the context permits, words in the above Detailed Description of the Preferred Embodiments using the singular or plural number may also include the plural or singular number respectively. The word "or" in reference to a list of two or more items, covers all of the following interpretations of the word: any of the items in the list, all of the items in the list, and any combination of the items in the list.

The above-detailed description of embodiments of the disclosure is not intended to be exhaustive or to limit the teachings to the precise form disclosed above. The scope of the invention being defined by the claims.

## Claims

1. A toilet module (10) comprising:
a shroud (14) that includes first and second opposite edges and a toilet (16) associated therewith,
a first toilet module attachment assembly (12) comprising
a retainer member (22) that is adapted to be secured to a wall (24), wherein the retainer member includes a wall attachment flange (28) and a press fit portion (30) extending generally inwardly from the wall attachment flange, wherein when the retainer member is secured to a wall a channel (32) is defined between the wall and the press fit portion, and
a seal member (26) that includes a bulge portion (38) that is received in the channel of the retainer member;
wherein said retainer member is a first retainer member (22) that is adapted to be secured to a first wall (24), wherein said wall attachment flange is a first wall attachment flange (28) and said press fit portion is a first press fit portion (30) extending generally inwardly from the first wall attachment flange (28), wherein when the first retainer member is secured to the first wall a first channel (32) is defined between the first wall and the first press fit portion, and wherein said seal member is a first seal member (26) that includes said bulge portion in the form of a first bulge portion (38) that is received in the first channel of the first retainer member, wherein the first edge of the shroud is secured by at least one of the first retainer member or the first seal member, and
a second attachment assembly (12) comprising a second retainer member (22) that is adapted to be secured to a second wall (24), wherein the second retainer member includes a second wall attachment flange (28) and a second press fit portion (30) extending generally inwardly from the second wall attachment flange, wherein when the second retainer member is secured to the second wall a second channel (32) is defined between the second wall and the second press fit portion, and a second seal member (26) that includes a second bulge portion (38) that is received in the second channel of the second retainer member, wherein the second edge of the shroud is secured by at least one of the second retainer member or the second seal member.

2. The toilet module of claim 1 wherein the first press fit portion (30) includes a first lip (40) and the first bulge portion (38) includes a first innermost peak, wherein when the first retainer member (22) is secured to the first wall (24), a first width (W1) is defined between the first lip and the first wall, wherein the second press fit portion (30) includes a second lip (40) and the second bulge portion (38) includes a second innermost peak, wherein when the second retainer member (22) is secured to the second wall (24), a second width (W2) is defined between the second lip and the second wall, wherein the first width is less than the second width.

3. The toilet module of claim 1 wherein the first attachment assembly (12) includes a first hook connection (44) at a bottom thereof, and wherein the second attachment assembly (12) includes a second hook connection (44) at a bottom thereof.

4. The toilet module of claim 3, wherein the first hook connection (44) comprises a first hook (46) on the first retainer member (22) and a second hook (48) on the first seal member (26) that are engaged with one another, and wherein the second hook connection (44) comprises a first hook (46) on the second retainer member (22) and a second hook (48) on the second seal member (26) that are engaged with one another.

5. The toilet module of claim 1 wherein the first seal member includes at least one protrusive portion extending generally downwardly therefrom that is received in a notch defined in the first press fit portion.

6. The toilet module of claim 1 wherein the first retainer member (22) includes a first support flange (31) extending inwardly therefrom, wherein the second retainer member (22) includes a second support flange (31) extending inwardly therefrom, wherein the first seal member (26) includes a first seal flange (74) extending inwardly therefrom, wherein the second seal member (26) includes a second seal flange (74) extending inwardly therefrom, wherein the first edge of the toilet shroud (14) is positioned between the first support flange and the first seal flange, and wherein the second edge of the toilet shroud is positioned between the second support flange and the second seal flange.

7. A method of securing a toilet module (10) between opposing first and second walls (24), the toilet module including a shroud (14) having first and second opposite edges, a back surface and a toilet (16) associated therewith, a first retainer member (22) secured to the first wall, and a second retainer member (22) secured to the second wall, the method comprising the steps of:
(a) resting the back surface of the toilet shroud on a first support flange (31) associated with the first retainer member,
(b) resting the back surface of the toilet shroud on a second support flange (31) associated with the second retainer member,
(c) press fitting a bulge portion (38) of a first seal member (26) into a channel (32) defined in the first retainer member, and
(d) press fitting a bulge portion (38) of a second seal member (26) into a channel (32) defined in the second retainer member.

8. The method of claim 7 further comprising the steps of engaging a first hook (46) on the first retainer member (22) with a second hook (48) on the first seal member (26), and engaging a first hook (46) on the second retainer member (22) with a second hook (48) on the second seal member (26).

9. The method of claim 8, further comprising the steps of engaging a ramp portion (50) of the second hook (48) on the first seal member (26) with a ramp portion (52) of the first hook (46) on the first retainer member (22), whereby the second hook slides over the first hook, and engaging a ramp portion (50) of the second hook (48) on the second seal member (26) with a ramp portion (50) of the first hook on the second retainer member, whereby the second hook slides over the first hook.

10. The method of claim 7 further comprising the steps of inserting a protrusive portion (54a, 54b) extending from the first seal member (26) into a notch (56) defined in the first retainer member (22), and inserting a protrusive portion (54a, 54b) extending from the second seal member (26) into a notch (56) defined in the second retainer member (22).

11. The method of claim 7 wherein a portion of the first seal member (26) is pressed against the first wall (24) to provide a seal, and wherein a portion of the second seal member (26) is pressed against the second wall (24) to provide a seal.

## Patentansprüche

1. Toilettenmodul (10), das Folgendes umfasst:
eine Abdeckung (14), die eine erste und eine zweite gegenüberliegende Kante und eine mit derselben verknüpfte Toilette (16) einschließt,
eine erste Toilettenmodul-Befestigungsbaugruppe (12), die Folgendes umfasst:
ein Halteelement (22), das eingerichtet ist, um an einer Wand (24) befestigt zu werden, wobei das Halteelement einen Wandbefestigungsflansch (28) und einen Presspassungsabschnitt (30), der sich im Allgemeinen von dem Wandbefestigungsflansch aus nach innen erstreckt, einschließt, wobei, wenn das Halteelement an einer Wand befestigt ist, ein Kanal (32) zwischen der Wand und dem Presspassungsabschnitt definiert wird, und
ein Dichtungselement (26), das einen Wulstabschnitt (38) einschließt, der in dem Kanal des Halteelements aufgenommen wird,
wobei das Halteelement ein erstes Halteelement (22) ist, das eingerichtet ist, um an einer ersten Wand (24) befestigt zu werden, wobei der Wandbefestigungsflansch ein erster Wandbefestigungsflansch (28) ist und der Presspassungsabschnitt ein erster Presspassungsabschnitt (30) ist, der sich im Allgemeinen von dem ersten Wandbefestigungsflansch (28) aus nach innen erstreckt, wobei, wenn das erste Halteelement an der ersten Wand befestigt ist, ein erster Kanal (32) zwischen der ersten Wand und dem ersten Presspassungsabschnitt definiert wird, und wobei das Dichtungselement ein erstes Dichtungselement (26) ist, das den Wulstabschnitt in der Form eines ersten Wulstabschnitts (38) einschließt, der in dem ersten Kanal des ersten Halteelements aufgenommen wird, wobei die erste Kante der Abdeckung durch mindestens eines von dem ersten Halteelement oder dem ersten Dichtungselement befestigt wird, und
eine zweite Befestigungsbaugruppe (12), die ein zweites Halteelement (22), das eingerichtet ist, um an einer zweiten Wand (24) befestigt zu werden, wobei das zweite Halteelement einen zweiten Wandbefestigungsflansch (28) und einen zweiten Presspassungsabschnitt (30), der sich im Allgemeinen von dem zweiten Wandbefestigungsflansch aus nach innen erstreckt, einschließt, wobei, wenn das zweite Halteelement an der zweiten Wand befestigt ist, ein zweiter Kanal (32) zwischen der zweiten Wand und dem zweiten Presspassungsabschnitt definiert wird, und ein zweites Dichtungselement (26), das einen zweiten Wulstabschnitt (38) einschließt, der in dem zweiten Kanal des zweiten Halteelements aufgenommen wird, einschließt, wobei die zweite Kante der Abdeckung durch mindestens eines von dem zweiten Halteelement oder dem zweiten Dichtungselement befestigt wird.

2. Toilettenmodul nach Anspruch 1, wobei der erste Presspassungsabschnitt (30) eine erste Lippe (40) einschließt und der erste Wulstabschnitt (38) eine erste innerste Spitze einschließt, wobei, wenn das erste Halteelement (22) an der ersten Wand (24) befestigt ist, eine erste Breite (W1) zwischen der ersten Lippe und der ersten Wand definiert wird, wobei der zweite Presspassungsabschnitt (30) eine zweite Lippe (40) einschließt und der zweite Wulstabschnitt (38) eine zweite innerste Spitze einschließt, wobei, wenn das zweite Halteelement (22) an der zweiten Wand (24) befestigt ist, eine zweite Breite (W2) zwischen der zweiten Lippe und der zweiten Wand definiert wird, wobei die erste Breite geringer ist als die zweite Breite.

3. Toilettenmodul nach Anspruch 1, wobei die erste Befestigungsbaugruppe (12) eine erste Hakenverbindung (44) an einem Unterteil derselben einschließt und wobei die zweite Befestigungsbaugruppe (12) eine zweite Hakenverbindung (44) an einem Unterteil derselben einschließt.

4. Toilettenmodul nach Anspruch 3, wobei die erste Hakenverbindung (44) einen ersten Haken (46) an dem ersten Halteelement (22) und einen zweiten Haken (48) an dem ersten Dichtungselement (26) einschließt, die miteinander in Eingriff gebracht sind, und wobei die zweite Hakenverbindung (44) einen ersten Haken (46) an dem zweiten Halteelement (22) und einen zweiten Haken (48) an dem zweiten Dichtungselement (26) einschließt, die miteinander in Eingriff gebracht sind.

5. Toilettenmodul nach Anspruch 1, wobei das erste Dichtungselement mindestens einen sich im Allgemeinen von demselben aus nach unten erstreckenden vorspringenden Abschnitt einschließt, der in einer Kerbe aufgenommen wird, die in dem ersten Presspassungsabschnitt definiert ist.

6. Toilettenmodul nach Anspruch 1, wobei das erste Halteelement (22) einen ersten Stützflansch (31) einschließt, der sich von demselben aus nach innen erstreckt, wobei das zweite Halteelement (22) einen zweiten Stützflansch (31) einschließt, der sich von demselben aus nach innen erstreckt, wobei das erste Dichtungselement (26) einen ersten Dichtungsflansch (74) einschließt, der sich von demselben aus nach innen erstreckt, wobei das zweite Dichtungselement (26) einen zweiten Dichtungsflansch (74) einschließt, der sich von demselben aus nach innen erstreckt, wobei die erste Kante der Toilettenabdeckung (14) zwischen dem ersten Stützflansch und dem ersten Dichtungsflansch angeordnet ist und wobei die zweite Kante der Toilettenabdeckung zwischen dem zweiten Stützflansch und dem zweiten Dichtungsflansch angeordnet ist.

7. Verfahren zum Befestigen eines Toilettenmoduls (10) zwischen ersten und zweiten gegenüberliegenden Wänden (24), wobei das Toilettenmodul eine Abdeckung (14), die eine erste und eine zweite gegenüberliegende Kante aufweist, eine Rückseite und eine mit derselben verknüpfte Toilette (16), ein erstes Halteelement (22), das an einer ersten Wand befestigt ist, und ein zweites Halteelement (22), das an einer zweiten Wand befestigt ist, einschließt, wobei das Verfahren die folgenden Schritte umfasst:
(a) Lagern der Rückseite der Toilettenabdeckung auf einem ersten Stützflansch (31), der mit dem ersten Halteelement verknüpft ist,
(b) Lagern der Rückseite der Toilettenabdeckung auf einem zweiten Stützflansch (31), der mit dem zweiten Halteelement verknüpft ist,
(c) Einpressen eines Wulstabschnitts (38) eines ersten Dichtungselements (26) in einen Kanal (32), der in dem ersten Halteelement definiert ist, und
(d) Einpressen eines Wulstabschnitts (38) eines zweiten Dichtungselements (26) in einen Kanal (32), der in dem zweiten Halteelement definiert ist.

8. Verfahren nach Anspruch 7, das ferner die Schritte des In-Eingriff-Bringens eines ersten Hakens (46) an dem ersten Halteelement (22) mit einem zweiten Haken (48) an dem ersten Dichtungselement (26) und des In-Eingriff-Bringens eines ersten Hakens (46) an dem zweiten Halteelement (22) mit einem zweiten Haken (48) an dem zweiten Dichtungselement (26) umfasst.

9. Verfahren nach Anspruch 8, das ferner die Schritte des In-Eingriff-Bringens eines Rampenabschnitts (50) des zweiten Hakens (48) an dem ersten Dichtungselement (26) mit einem Rampenabschnitt (52) des ersten Hakens (46) an dem ersten Halteelement (22), wodurch der zweite Haken über den ersten Haken gleitet, und des In-Eingriff-Bringens eines Rampenabschnitts (50) des zweiten Hakens (48) an dem zweiten Dichtungselement (26) mit einem Rampenabschnitt (52) des ersten Hakens an dem zweiten Halteelement, wodurch der zweite Haken über den ersten Haken gleitet, umfasst.

10. Verfahren nach Anspruch 7, das ferner die Schritte des Einfügens eines vorspringenden Abschnitts (54a, 54b), der sich von dem ersten Dichtungselement (26) aus erstreckt, in eine Kerbe (56), die in dem ersten Halteelement (22) definiert ist, und des Einfügens eines vorspringenden Abschnitts (54a, 54b), der sich von dem zweiten Dichtungselement (26) aus erstreckt, in eine Kerbe (56), die in dem zweiten Halteelement (22) definiert ist, umfasst.

11. Verfahren nach Anspruch 7, wobei ein Abschnitt des ersten Dichtungselements (26) gegen die erste Wand (24) gepresst wird, um eine Dichtung bereitzustellen, und wobei ein Abschnitt des zweiten Dichtungselements (26) gegen die zweite Wand (24) gepresst wird, um eine Dichtung bereitzustellen.

## Revendications

1. Module de toilette (10), comprenant :
une enveloppe (14) incluant des premier et deuxième bords opposés et une toilette (16) associée à celle-ci ;
un premier ensemble de fixation du module de toilette (12), comprenant :
un élément de retenue (22) adapté pour être fixé sur une paroi (24), dans lequel l'élément de retenue inclut une bride de fixation sur la paroi (28) et une partie à ajustement par pression (30) s'étendant en général vers l'intérieur à partir de la bride de fixation sur la paroi, dans lequel, lorsque l'élément de retenue est fixé sur une paroi, un canal (32) est défini entre la paroi et la partie à ajustement par pression ; et
un élément d'étanchéité (256) incluant une partie bombée (38) qui est reçue dans le canal de l'élément de retenue ;
dans lequel ledit élément de retenue est un premier élément de retenue (22) adapté pour être fixé sur une première paroi (24), dans lequel ladite bride de fixation sur la paroi est une première bride de fixation sur la paroi (28) et ladite partie à ajustement par pression est une première partie à ajustement par pression (30) s'étendant en général vers l'intérieur à partir de la première bride de fixation sur la paroi (28), dans lequel, lorsque le premier élément de retenue est fixé sur la première paroi, un premier canal (32) est défini entre la première paroi et la partie à ajustement par pression, et dans lequel ledit élément d'étanchéité est un premier élément d'étanchéité (26) incluant ladite partie bombée sous forme d'une première partie bombée (38) qui est reçue dans le premier canal du premier élément de retenue, dans lequel le premier bord de l'enveloppe est fixé par au moins un parmi le premier élément de retenue ou le premier élément d'étanchéité ; et
un deuxième ensemble de fixation (12) comprenant un deuxième élément de retenue (22) adapté pour être fixé sur une deuxième paroi (24), dans lequel le deuxième élément de retenue inclut une deuxième bride de fixation sur la paroi (28) et une deuxième partie à ajustement par pression (30) s'étendant en général vers l'intérieur à partir de la deuxième bride de fixation sur la paroi, dans lequel, lorsque le deuxième élément de retenue est fixé sur la deuxième paroi, un deuxième canal (32) est défini entre la deuxième paroi et la deuxième partie à ajustement par pression, et un deuxième élément d'étanchéité (26) incluant une deuxième partie bombée (38) qui est reçue dans le deuxième canal du deuxième élément de retenue, dans lequel le deuxième bord de l'enveloppe est fixé par au moins parmi le deuxième élément de retenue ou le deuxième élément d'étanchéité.

2. Module de toilette selon la revendication 1, dans lequel la première partie à ajustement par pression (30) inclut une première lèvre (40) et la première partie bombée (38) inclut un premier sommet interne extrême, dans lequel, lorsque le premier élément de retenue (22) est fixé sur la première paroi (24), une première largeur (W1) est définie entre la première lèvre et la première paroi, dans lequel la deuxième partie à ajustement par pression (30) inclut une deuxième lèvre (40) et la deuxième partie bombée (38) inclut un deuxième sommet interne extrême, dans lequel, lorsque le deuxième élément de retenue (22) est fixé sur la deuxième paroi (24), une deuxième largeur (W2) est définie entre la deuxième lèvre et la deuxième paroi, dans lequel la première largeur est inférieure à la deuxième largeur.

3. Module de toilette selon la revendication 1, dans lequel le premier ensemble de fixation (12) inclut une première connexion à crochet (44) au niveau de sa partie inférieure, et dans lequel le deuxième ensemble de fixation (12) inclut une deuxième connexion à crochet (44) au niveau de sa partie inférieure.

4. Module de toilette selon la revendication 3, dans lequel la première connexion à crochet (44) comprend un premier crochet (46) sur le premier élément de retenue (22) et un deuxième crochet (48) sur le premier élément d'étanchéité (26) qui sont engagés l'un dans l'autre, et dans lequel la deuxième connexion à crochet (44) comprend un premier crochet (46) sur le deuxième élément de retenue (22) et un deuxième crochet (48) sur le deuxième élément d'étanchéité (26) qui sont engagés l'un dans l'autre.

5. Module de toilette selon la revendication 1, dans lequel le premier élément d'étanchéité inclut au moins une partie en saillie s'étendant en général vers le bas de celui-ci, qui est reçue dans une encoche définie dans la première partie à ajustement par pression.

6. Module de toilette selon la revendication 1, dans lequel le premier élément de retenue (22) inclut une première bride de support (31) s'étendant vers l'intérieur de celui-ci, dans lequel le deuxième élément de retenue (22) inclut une deuxième bride de support (31) s'étendant vers l'intérieur de celui-ci, dans lequel le premier élément d'étanchéité (26) inclut une première bride d'étanchéité (74) s'étendant vers l'intérieur de celui-ci, dans lequel le deuxième élément d'étanchéité (26) inclut une deuxième bride d'étanchéité (74) s'étendant vers l'intérieur de celui-ci, dans lequel le premier bord de l'enveloppe de la toilette (14) est positionné entre la première bride de support et la première bride d'étanchéité, et dans lequel le deuxième bord de l'enveloppe de la toilette est positionné entre la deuxième bride de support et la deuxième bride d'étanchéité.

7. Procédé de fixation d'un module de toilette (10) entre des première et deuxième parois opposées (24), le module de toilette incluant une enveloppe (14) comportant des premier et deuxième bords opposés, une surface arrière et une toilette (16) qui y est associée, un premier élément de retenue (22) fixé sur la première paroi, et un deuxième élément de retenue (22) fixé sur la deuxième paroi, le procédé comprenant les étapes suivantes :
(a) pose de la surface arrière de l'enveloppe de toilette sur une première bride de support (31) associée au premier élément de retenue ;
(b) pose de la surface arrière de l'enveloppe de toilette sur une deuxième bride de support (31) associée au deuxième élément de retenue ;
(c) ajustement par pression d'une partie bombée (38) d'un deuxième élément d'étanchéité (26) dans un canal (32) défini dans le deuxième élément de retenue ; et
(d) ajustement par pression d'une partie bombée (38) d'un deuxième élément d'étanchéité (26) dans un canal (32) défini dans le deuxième élément de retenue.

8. Procédé selon la revendication 7, comprenant en outre les étapes d'engagement d'un premier crochet (46) sur le premier élément de retenue (22) avec un deuxième crochet (48) sur le premier élément d'étanchéité (26) et d'engagement d'un premier crochet (46) sur le deuxième élément de retenue (22) avec un deuxième crochet (48) sur le deuxième élément d'étanchéité (26).

9. Procédé selon la revendication 8, comprenant en outre les étapes d'engagement d'une partie en rampe (50) du deuxième crochet (48) sur le premier élément d'étanchéité (26) avec une partie en rampe (52) du premier crochet (46) sur le premier élément de retenue (22), le deuxième crochet glissant ainsi au-dessus du premier crochet, et d'engagement d'une partie en rampe (50) du deuxième crochet (48) sur le deuxième élément d'étanchéité (26) avec une partie en rampe (50) du premier crochet sur le deuxième élément de retenue, le deuxième crochet glissant ainsi au-dessus du premier crochet.

10. Procédé selon la revendication 7, comprenant en outre les étapes d'insertion d'une partie en saillie (54a, 54b) s'étendant à partir du premier élément d'étanchéité (26) dans une encoche (56) définie dans le premier élément de retenue (22), et d'insertion d'une partie en saillie (54a, 54b) s'étendant à partir du deuxième élément d'étanchéité (26) dans une encoche (56) définie dans le deuxième élément de retenue (22).

11. Procédé selon la revendication 7, dans lequel une partie du premier élément d'étanchéité (26) est pressée contre la première paroi (24) pour établir un joint d'étanchéité, et dans lequel une partie du deuxième élément d'étanchéité (26) et pressée contre la deuxième paroi (24) pour établir un joint d'étanchéité.
